# EUROPÄISCHE PATENTANMELDUNG

(11) **EP 4 691 747 A1**
(43) Veröffentlichungstag der Anmeldung: **11.02.2026**
(21) Anmeldenummer: 25186123.3
(22) Anmeldetag: 30.06.2025
(51) Int. Cl.: B29D 30/56

(54) **VERFAHREN ZUM HERSTELLEN EINES VORVULKANISIERTEN LAUFSTREIFENS, VORVULKANISIERTER LAUFSTREIFEN UND FAHRZEUGREIFEN MIT VORVULKANISIERTEN LAUFSTREIFEN**

(30) Priorität: 08.08.2024 DE 102024207538
(71) Anmelder: Continental Reifen Deutschland GmbH, 30175 Hannover (DE)
(72) Erfinder: Korbas, Mario, 020 01 Púchov (SK)
(74) Vertreter: Continental Corporation

(57) **Zusammenfassung**

Herstellungsverfahren zum Herstellen eines vorvulkanisierten Laufstreifens (1), umfassend die Verfahrensschritte:
- Bereitstellen einer Laufstreifen-Vulkanisierpresse,
- Füllen der Laufstreifen-Vulkanisierpresse mit einem Komponentensatz, wobei der Komponentensatz eine Laufstreifenmischung umfasst,
- Vorvulkanisieren des Komponentensatzes in der Laufstreifen-Vulkanisierpresse zu dem vorvulkanisierten Laufstreifen (1),
- Entformen des vorvulkanisierten Laufstreifens (1) aus der Laufstreifen-Vulkanisierpresse, wobei der Komponentensatz eine Verstärkungsschicht (2) umfasst.

## Beschreibung

Vorvulkanisierte Laufstreifen sind insbesondere vorteilhaft in einem Runderneuerungsverfahren, da aufgrund des Vorvulkanisieren der Laufstreifen Vulkanisierzeiten in der Vulkanisiervorrichtung kurz gehalten und auf Stahlbandagen oder -hülsen verzichten werden kann.

Die WO 92/08603 offenbart ein Verfahren zur Runderneuerung eines Stahlgürtelreifens, um beschädigte Gürtel und Laufflächengummis wiederherzustellen.

Die US 9,327,465 B2 offenbart ein Verfahren zur Herstellung runderneuerter Reifen, welches beim Runderneuern der Reifen die Bildung einer rauen Oberfläche mit der daraus resultierenden Abnahme der Delaminationsbeständigkeit des neuen Laufflächengummis vermeidet.

Die US 4,971,643 offenbart ein Verfahren zum Runderneuern eines Gürtels eines Luftreifens eines Fahrzeuges, wobei nach dem Auflegen von Ersatzgürtellagen auf den Reifenkörper fertig vulkanisierte profilierte Laufstreifen aufgelegt werden.

Die US 3,841,376 offenbart ein Verfahren zum Runderneuern eines Diagonalreifens, das ein Aufbringen einer Schicht aus vulkanisierbarem Elastomermaterial auf den Reifen und ein Aufbringen einer Lage aus quadratisch gewebtem Nylon mit gezahnten Seitenkanten in Umfangsrichtung auf den Reifen umfasst.

Die US 11,254,165 B2 offenbart eine vorvulkanisierte Laufflächeneinheit zur Montage auf einer Reifenhülle, wobei die vorvulkanisierte Laufflächeneinheit einen Laufflächenabschnitt mit einer Bodenaufstandsfläche mit mehreren Rillen und einer Montagefläche mit einer befestigten Verstärkungsgewebeschicht umfasst.

Dem Stand der Technik ist gemeinsam, dass bei den Runderneuerungsverfahren eines Fahrzeugreifens ein vorvulkanisierter Laufstreifen verwendet wird, der keine Verstärkungsschicht aufweist. In den Runderneuerungsverfahren werden dem Fahrzeugreifen erst mit dem Verbinden des vorvulkanisierten Laufstreifens mit der Reifenkarkasse eine Verstärkungsschicht hinzugefügt, indem die Verstärkungsschicht zwischen dem vorvulkanisierten Laufstreifen und der Reifenkarkasse angeordnet wird. Daraus ergibt sich der technische Nachteil, dass die zusätzliche dritte Schicht in Form der Verstärkungsschicht zu einer höheren Komplexität der Runderneuerungsverfahren führt. Zudem ist der Boden des vorvulkanisierten Laufstreifens aufzurauen, um die Haftung zu der nächsten Schicht, beispielsweise der Verstärkungsschicht, zu erhöhen.

Vor diesem Hintergrund liegt der Erfindung die erste Aufgabe zugrunde, ein Verfahren zum Herstellen eines verbesserten vorvulkanisierten Laufstreifens zur Verfügung zu stellen, welcher die Effizienz eines Runderneuerungsverfahrens erhöht. Zudem liegt der Erfindung die zweite Aufgabe zugrunde, einen vorvulkanisierten Laufstreifen zur Verfügung zu stellen, welcher die Effizienz des Runderneuerungsverfahrens erhöht. Ferner liegt der Erfindung die dritte Aufgabe zugrunde, ein Fahrzeugreifen zur Verfügung zu stellen, der durch ein effizienteres Runderneuerungsverfahren hergestellt ist.

Die erstgenannte Aufgabe wird gelöst durch ein Herstellungsverfahren mit den Merkmalen gemäß Anspruch 1. Die zweitgenannte Aufgabe wird gelöst durch einen vorvulkanisierten Laufstreifen mit den Merkmalen gemäß nebengeordnetem Anspruch 9. Die drittgenannte Aufgabe wird gelöst durch einen Fahrzeugreifen mit den Merkmalen gemäß nebengeordnetem Anspruch 10. Die Unteransprüche betreffen vorteilhafte Ausführungsformen der Erfindung.

Erfindungsgemäß ist ein Herstellungsverfahren mit den Merkmalen nach Anspruch 1 offenbart.

Das erfindungsgemäße Herstellungsverfahren ist zum Herstellen eines vorvulkanisierten Laufstreifens ausgebildet, wobei das Herstellungsverfahren folgende Verfahrensschritte aufweist:
In einem Verfahrensschritt wird eine Laufstreifen-Vulkanisierpresse bereitgestellt, die es ermöglicht, unter Zuhilfenahme eines Parametersets aus Druck, Temperatur und Zeit eine mit diesen Parameterset unbehandelte Laufstreifenmischung durch Vorvulkanisieren teilweise auszuhärten bzw. vorzuhärten.

In einem weiteren Verfahrensschritt wird die Laufstreifen-Vulkanisierpresse mit einem Komponentensatz gefüllt, der eine Laufstreifenmischung aufweist. Die Laufstreifenmischung kann Naturkautschuk, Synthetik-Kautschuk oder eine Kautschukmischung mit weiteren Materialkombinationen umfassen.

Erfindungsgemäß umfasst der Komponentensatz neben der Laufstreifenmischung eine Verstärkungsschicht. D.h., die Verstärkungsschicht wird zusammen mit der Laufstreifenmischung der Laufstreifen-Vulkanisierpresse hinzugefügt.

In einem weiteren Verfahrensschritt wird der die Verstärkungsschicht und die Laufstreifenmischung aufweisende Komponentensatz in der Laufstreifen-Vulkanisierpresse unter Zuhilfenahme des Parametersets aus Druck, Temperatur und Zeit zu dem vorvulkanisierten Laufstreifen vorgehärtet. Der so vorvulkanisierte Laufstreifen wird durch Entformen der Laufstreifen-Vulkanisierpresse in einem weiteren Verfahrensschritt entnommen.

Das erfindungsgemäße Herstellungsverfahren ermöglicht die Herstellung des verbesserten vorvulkanisierten Laufstreifens, welcher die Effizienz eines Runderneuerungsverfahrens erhöht.

Gemäß eines bevorzugten Herstellungsverfahrens erstreckt sich die Verstärkungsschicht über die gesamte Länge des Laufstreifens. D.h., in einem bestimmungsgemäßen Gebrauch des vorvulkanisierten Laufstreifens mit einem Fahrzeugreifen verläuft die Verstärkungsschicht entlang des gesamten Umfangs des Fahrzeugreifens.

Das bevorzugte Herstellungsverfahren weist neben der Herstellung des vorvulkanisierten, die Effizienz eines Runderneuerungsverfahrens erhöhenden Laufstreifens den weiteren Vorteil auf, dass der so hergestellte vorvulkanisierte Laufstreifen zusätzlich entlang des gesamten Umfangs des Fahrzeugreifens eine flächendeckende Verstärkung bietet.

Gemäß eines weiteren bevorzugten Herstellungsverfahrens umfasst die Verstärkungsschicht einzelne Segmente, die entlang der gesamten Länge des vorvulkanisierten Laufstreifens angeordnet sind. D.h., in einem bestimmungsgemäßen Gebrauch des vorvulkanisierten Laufstreifens mit einem Fahrzeugreifen sind die Segmente entlang der gesamten Länge des Umfangs des Fahrzeugreifens angeordnet. Das bevorzugte Herstellungsverfahren weist neben der Herstellung des vorvulkanisierten, die Effizienz eines Runderneuerungsverfahrens erhöhenden Laufstreifens den weiteren Vorteil auf, dass der so hergestellte vorvulkanisierte Laufstreifen sich aus der Laufstreifen-Vulkanisierpresse leichter Entformen lässt.

Gemäß eines weiteren bevorzugten Herstellungsverfahrens sind die einzelnen Segmente an vorbestimmten Positionen in Längsrichtung und in Querrichtung des vorvulkanisierten Laufstreifens angeordnet. D.h., in einem bestimmungsgemäßen Gebrauch des vorvulkanisierten Laufstreifens mit einem Fahrzeugreifen sind die Segmente entlang der gesamten Länge eines Umfangs als auch in axialer Richtung des Fahrzeugreifens verteilt angeordnet, wobei die der axialen Richtung zugrunde liegende Achse die Drehachse des Fahrzeugreifens ist. Die einzelnen Segmente der Verstärkungsschicht werden derart verteilt angeordnet, dass an vorbestimmten Positionen eine zusätzliche Verstärkung vorliegt, wobei die Positionen der einzelnen Segmente der Verstärkungsschicht den Positionen etwaiger Risse in dem zu erneuernden Fahrzeugreifen gleichen.

Das bevorzugte Herstellungsverfahren weist neben der Herstellung des vorvulkanisierten, die Effizienz eines Runderneuerungsverfahrens erhöhenden Laufstreifens den weiteren Vorteil auf, dass nur einzelne Positionen, beispielsweise die Position einzelner Risse, geschützt werden. Dies hat zur Folge, dass zum einen an Schwachstellen des Fahrzeugreifens eine zusätzliche Verstärkung durch einzelne Segmente einer Verstärkungsschicht vorliegt und zum anderen weniger Material der Verstärkungsschicht zur Herstellung verwendet wird.

Gemäß eines weiteren bevorzugten Herstellungsverfahrens weisen die einzelnen Segmente unterschiedliche Materialkombinationen auf. D.h., in einem bestimmungsgemäßen Gebrauch des vorvulkanisierten Laufstreifens mit einem Fahrzeugreifen sind entlang des Umfangs des Fahrzeugreifens die einzelnen Segmente der Verstärkungsschicht mit unterschiedlichen Materialkombinationen ausgebildet.

Das bevorzugte Herstellungsverfahren weist neben der Herstellung des vorvulkanisierten, die Effizienz eines Runderneuerungsverfahrens erhöhenden Laufstreifens den weiteren Vorteil auf, dass an Schwachstellen des Fahrzeugreifens eine zusätzliche Verstärkung durch einzelne Segmente der Verstärkungsschicht mit beispielsweise einer höheren Materialdichte vorliegt.

Gemäß eines weiteren bevorzugten Herstellungsverfahrens weisen die einzelnen Segmente unterschiedliche Dicken auf. D.h., in einem bestimmungsgemäßen Gebrauch des vorvulkanisierten Laufstreifens mit einem Fahrzeugreifen sind entlang des Umfangs des Fahrzeugreifens die einzelnen Segmente der Verstärkungsschicht mit unterschiedlicher Dicke ausgebildet.

Das bevorzugte Herstellungsverfahren weist neben der Herstellung des vorvulkanisierten, die Effizienz eines Runderneuerungsverfahrens erhöhenden Laufstreifens den weiteren Vorteil auf, dass an Schwachstellen des Fahrzeugreifens eine zusätzliche Verstärkung durch Segmente der Verstärkungsschicht mit einer größeren Dicke vorliegt.

Gemäß eines weiteren bevorzugten Herstellungsverfahrens weisen einzelnen Segmente unterschiedliche Breiten auf. D.h., in einem bestimmungsgemäßen Gebrauch des vorvulkanisierten Laufstreifens mit einem Fahrzeugreifen sind entlang des Umfangs des Fahrzeugreifens die einzelnen Segmente der Verstärkungsschicht mit unterschiedlicher Breite ausgebildet, wobei die jeweiligen Breiten parallel zur axialen Richtung des Fahrzeugreifens verlaufen. Dabei ist die der axialen Richtung zugrunde liegende Achse die Drehachse des Fahrzeugreifens. Durch die Ausgestaltung des Laufstreifens mit Segmenten, die unterschiedliche Breiten aufweisen, können beispielsweise Risse in dem Laufstreifen sich nur begrenzt ausbreiten. Ein Riss in einem Bereich des Fahrzeugreifens, in dem ein Segment der Verstärkungsschicht mit einer kleinen Breite vorliegt, wird an seiner Ausbreitung gestoppt, sobald die Ausbreitung des Risses den Übergang zu einem Segment der Verstärkungsschicht mit einer größeren Breite erreicht.

Das bevorzugte Herstellungsverfahren weist neben der Herstellung des vorvulkanisierten, die Effizienz eines Runderneuerungsverfahrens erhöhenden Laufstreifens den weiteren Vorteil eines Stoppens einzelner Risse in dem vorvulkanisierten Laufstreifen auf.

Gemäß eines weiteren bevorzugten Herstellungsverfahrens bildet die Verstärkungsschicht eine der Lauffläche gegenüberliegenden Seite des vorvulkanisierten Laufstreifens. D.h., in einem bestimmungsgemäßen Gebrauch des vorvulkanisierten Laufstreifens mit einem Fahrzeugreifen ist die Lauffläche radial außen angeordnet und für einen Kontakt mit einer Straßenoberfläche ausgebildet. In dem bestimmungsgemäßen Gebrauch ist die der Lauffläche gegenüberliegende Seite des vorvulkanisierten Laufstreifens radial innen angeordnet. Die Verstärkungsschicht bildet eine raue Oberfläche, die die Haftung zu der nächstliegenden Schicht erhöht. Ein weiteres Aufrauen des Bodens des Laufstreifens im Vergleich zu einem standardisierten Runderneuerungsverfahren ist somit nicht notwendig.

Das bevorzugte Herstellungsverfahren weist neben der Herstellung des vorvulkanisierten, die Effizienz eines Runderneuerungsverfahrens erhöhenden Laufstreifens den weiteren Vorteil einer weiteren Erhöhung der Effizienz des Runderneuerungsverfahrens auf.

Erfindungsgemäß ist ein vorvulkanisierter Laufstreifen mit den Merkmalen gemäß nebengeordnetem Anspruch 9 offenbart.

Der erfindungsgemäße vorvulkanisierte Laufstreifen wurde durch ein erfindungsgemäßes Herstellungsverfahren hergestellt und erhöht die Effizienz eines Runderneuerungsverfahrens.

Erfindungsgemäß ist ein Fahrzeugreifen mit den Merkmalen gemäß nebengeordnetem Anspruch 10 offenbart.

Der erfindungsgemäße Fahrzeugreifen weist einen erfindungsgemäßen vorvulkanisierten Laufstreifen auf, wodurch der Fahrzeugreifen in einem Runderneuerungsverfahren effizienter hergestellt wurde.

Weitere Merkmale, Vorteile und Einzelheiten der Erfindung werden nun anhand der Zeichnungen näher beschrieben.
Figur 1 zeigt einen bevorzugten vorvulkanisierten Laufstreifen mit einer über die gesamte Länge des vorvulkanisierten Laufstreifens erstreckenden Verstärkungsschicht.
Figur 2 zeigt einen weiteren bevorzugten vorvulkanisierten Laufstreifen mit einer einzelne Segmente aufweisenden Verstärkungsschicht.
Figur 3 zeigt einen weiteren bevorzugten vorvulkanisierten Laufstreifen mit einer einzelne Segmente aufweisenden Verstärkungsschicht, wobei die einzelnen Segmente unterschiedliche Dicken aufweisen.
Figur 4 zeigt einen weiteren bevorzugten vorvulkanisierten Laufstreifen mit einer einzelne Segmente aufweisenden Verstärkungsschicht, wobei die einzelnen Segmente unterschiedliche Materialien aufweisen.
Figur 5 zeigt einen bevorzugten vorvulkanisierten Laufstreifen mit einer Verstärkungsschicht, die eine einer Lauffläche des vorvulkanisierten Laufstreifens gegenüberliegende Seite bildet.
Figur 6 zeigt einen weiteren bevorzugten vorvulkanisierten Laufstreifen mit einer einzelne Segmente aufweisenden Verstärkungsschicht, wobei die einzelnen Segmente unterschiedliche Breiten aufweisen.
Figur 7 zeigt einen weiteren bevorzugten vorvulkanisierten Laufstreifen mit einer einzelne Segmente aufweisenden Verstärkungsschicht, wobei die einzelnen Segmente an unterschiedlichen Positionen angeordnet sind.

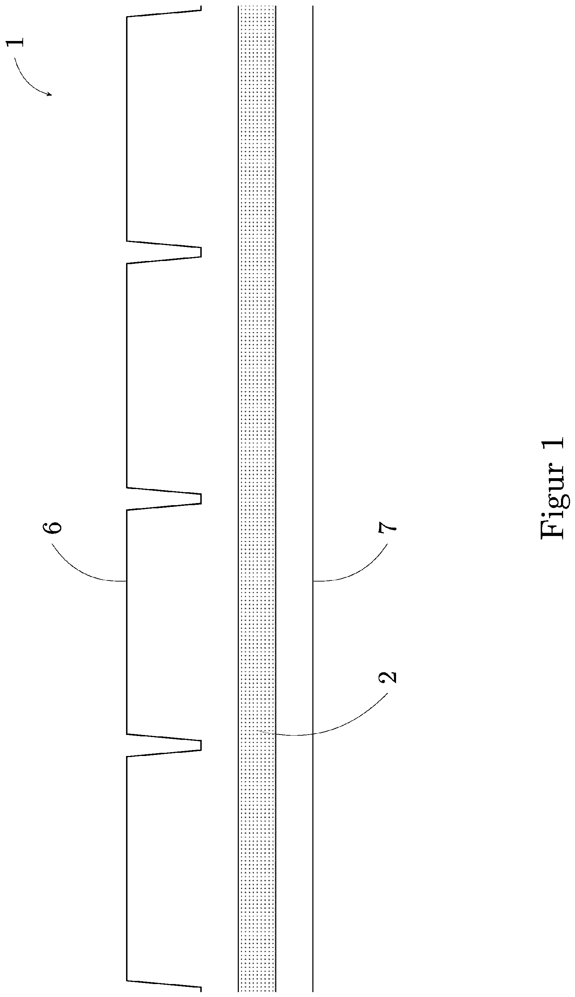

Die Figuren 1 bis 7 offenbaren bevorzugte vorvulkanisierte Laufstreifen 1, die jeweils durch ein erfindungsgemäßes Herstellungsverfahren hergestellt wurden.

In einem Verfahrensschritt des erfindungsgemäßen Herstellungsverfahrens wird eine Laufstreifen-Vulkanisierpresse bereitgestellt. In weiteren Verfahrensschritten wird in die Laufstreifen-Vulkanisierpresse ein Komponentensatz gefüllt, der eine Laufstreifenmischung umfasst.

Erfindungsgemäß umfasst der Komponentensatz zudem eine Verstärkungsschicht 2. D.h., die Laufstreifen-Vulkanisierpresse wird mit der Laufstreifenmischung und der Verstärkungsschicht 2 befüllt. Der Komponentensatz wird in der Laufstreifen-Vulkanisierpresse anschließend vorvulkanisiert und als vorvulkanisierten Laufstreifen 1 entformt, d.h. der Laufstreifen-Vulkanisierpresse entnommen.

Die Figur 1 zeigt einen bevorzugten vorvulkanisierten Laufstreifen 1, der durch ein solches erfindungsgemäßes Herstellungsverfahren hergestellt wurde. Die Figur 1 zeigt den bevorzugten vorvulkanisierten Laufstreifen 1 in einem Längsschnitt aus Sicht der Reifenschulter. Der vorvulkanisierte Laufstreifen 1 umfasst eine Lauffläche 6 und eine der Lauffläche 6 gegenüberliegenden Seite 7 des Laufstreifens. Innerhalb des vorvulkanisierten Laufstreifens 1, d.h. zwischen der Lauffläche 6 und der der Lauffläche 6 gegenüberliegenden Seite 7, ist eine Verstärkungsschicht 2 angeordnet.

**In** Figur 1 erstreckt sich die Verstärkungsschicht 2 über die gesamte Länge des vorvulkanisierten Laufstreifens 1. D.h., in einem bestimmungsgemäßen Gebrauch des vorvulkanisierten Laufstreifens 1 mit einem Fahrzeugreifen erstreckt sich die Verstärkungsschicht 2 entlang des gesamten Umfangs des Fahrzeugreifens, woraus entlang des Umfangs des Fahrzeugreifens eine flächendeckende Verstärkung folgt.

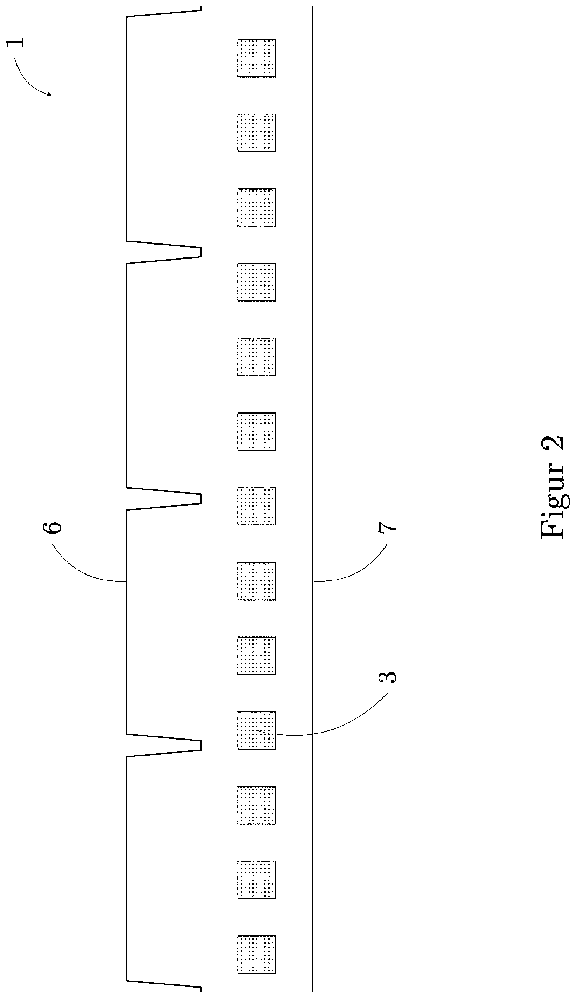

Die Figur 2 zeigt einen weiteren bevorzugten vorvulkanisierten Laufstreifen 1, der durch ein erfindungsgemäßes Herstellungsverfahren hergestellt wurde, wobei der vorvulkanisierte Laufstreifen 1 aus der Sicht der Reifenschulter in einem Längsschnitt dargestellt ist. Der vorvulkanisierte Laufstreifen 1 umfasst eine Lauffläche 6 und eine der Lauffläche 6 gegenüberliegenden Seite 7 des Laufstreifens 1, wobei innerhalb des vorvulkanisierten Laufstreifens 1 eine Verstärkungsschicht 2 angeordnet ist.

In Figur 2 ist die Verstärkungsschicht 2 in einzelne Segmente 3 unterteilt. Die einzelnen Segmente 3 erstrecken sich über die gesamte Länge des Laufstreifens 1. D.h., in einem bestimmungsgemäßen Gebrauch des vorvulkanisierten Laufstreifens 1 mit einem Fahrzeugreifen erstreckt sich die Verstärkungsschicht 2 in Form der einzelnen Segmente entlang des gesamten Umfangs des Fahrzeugreifens, woraus eine leichtere Entformbarkeit des vorvulkanisierten Laufstreifens 1 folgt.

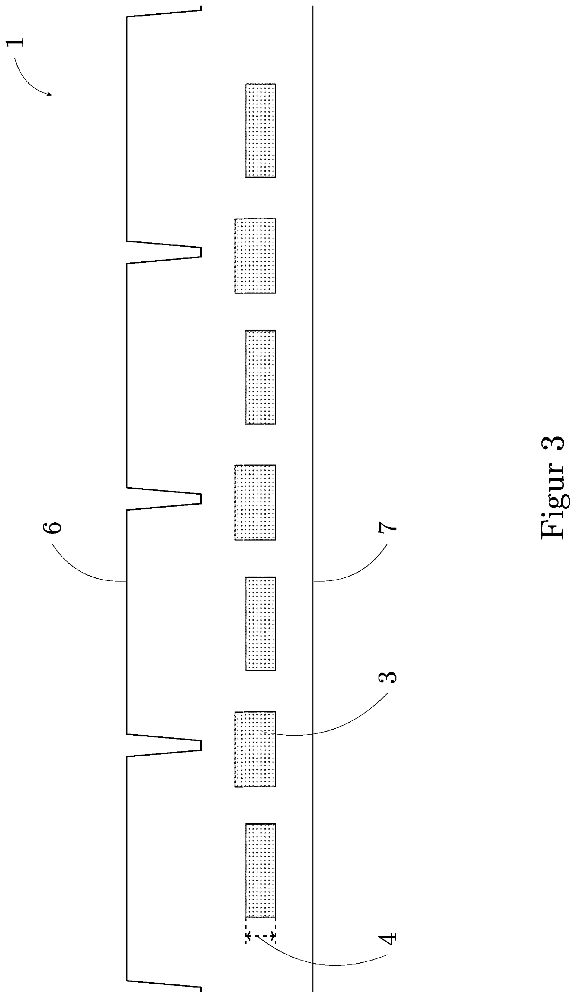

Die Figur 3 zeigt einen weiteren bevorzugten vorvulkanisierten Laufstreifen 1, der durch ein erfindungsgemäßes Herstellungsverfahren hergestellt wurde, wobei der vorvulkanisierte Laufstreifen 1 aus der Sicht der Reifenschulter in einem Längsschnitt dargestellt ist. Der vorvulkanisierte Laufstreifen 1 umfasst eine Lauffläche 6 und eine der Lauffläche 6 gegenüberliegenden Seite 7 des Laufstreifens 1, wobei innerhalb des vorvulkanisierten Laufstreifens 1 eine Verstärkungsschicht 2 in Form einzelner Segmente 3 angeordnet ist, die sich hierbei über die gesamte Länge des Laufstreifens 1 erstrecken können.

In Figur 3 weisen die einzelnen Segmente 3 der Verstärkungsschicht 2 entlang der Längsrichtung des vorvulkanisierten Laufstreifens 1 unterschiedliche Dicken 4 auf. D.h., in einem bestimmungsgemäßen Gebrauch des vorvulkanisierten Laufstreifens 1 mit einem Fahrzeugreifen weisen die einzelnen Segmente 3 der Verstärkungsschicht 2 in radialer Richtung unterschiedliche Dicken 4 auf, woraus entlang des Umfangs an Schwachstellen des Fahrzeugreifens eine zusätzliche Verstärkung durch dickere einzelne Segmente 3 der Verstärkungsschicht 2 folgt. Beispielsweise sind in Figur 3 die Rillen des Reifenprofils Schwachstellen, die durch einzelne Segmente 3 der Verstärkungsschicht 2 mit einer größeren Dicke 4 verstärkt sind. Die Blöcke des Reifenprofils sind keine Schwachstellen, so dass an diesen Stellen einzelne Segmente 3 der Verstärkungsschicht 2 mit einer kleineren Dicke 4 angeordnet sind.

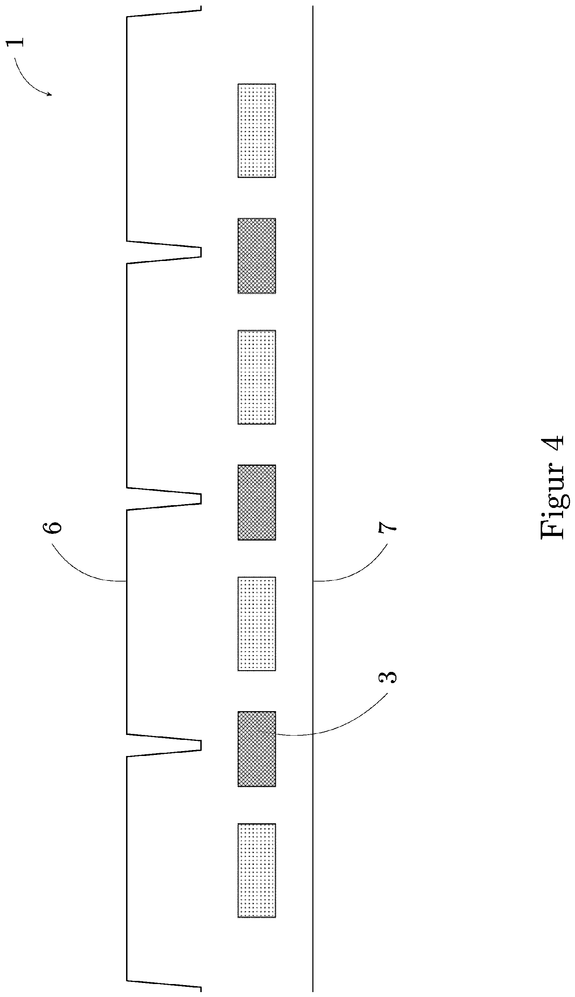

Die Figur 4 zeigt einen weiteren bevorzugten vorvulkanisierten Laufstreifen 1, der durch ein erfindungsgemäßes Herstellungsverfahren hergestellt wurde, wobei der vorvulkanisierte Laufstreifen 1 aus der Sicht der Reifenschulter in einem Längsschnitt dargestellt ist. Der vorvulkanisierte Laufstreifen 1 umfasst eine Lauffläche 6 und eine der Lauffläche 6 gegenüberliegenden Seite 7 des Laufstreifens 1, wobei innerhalb des vorvulkanisierten Laufstreifens 1 eine Verstärkungsschicht 2 in Form einzelner Segmente 3 angeordnet ist, die sich hierbei über die gesamte Länge des Laufstreifens 1 erstrecken können.

In Figur 4 weisen die einzelnen Segmente 3 der Verstärkungsschicht 2 entlang der Längsrichtung des vorvulkanisierten Laufstreifens 1 unterschiedliche Materialien auf. D.h., in einem bestimmungsgemäßen Gebrauch des vorvulkanisierten Laufstreifens 1 mit einem Fahrzeugreifen weisen die einzelnen Segmente 3 der Verstärkungsschicht 2 entlang des Umfangs des Fahrzeugreifens unterschiedliche Materialien auf, woraus entlang des Umfangs an Schwachstellen des Fahrzeugreifens eine zusätzliche Verstärkung durch die einzelnen Segmente 3 der Verstärkungsschicht 2 mit beispielsweise einer höheren Materialdichte folgt. Beispielsweise sind in Figur 4 die Rillen des Reifenprofils Schwachstellen, die durch einzelne Segmente 3 der Verstärkungsschicht 2 mit einer höheren Materialdichte verstärkt sind. Die Blöcke des Reifenprofils sind keine Schwachstellen, so dass an diesen Stellen einzelne Segmente 3 der Verstärkungsschicht 2 mit einer kleineren Materialdichte angeordnet sind.

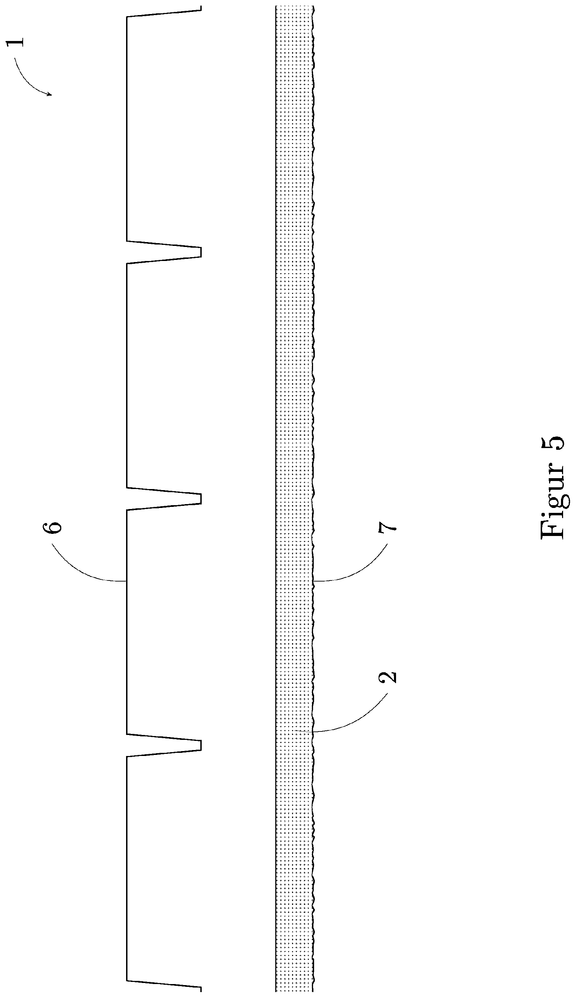

Die Figur 5 zeigt einen weiteren bevorzugten vorvulkanisierten Laufstreifen 1, der durch ein erfindungsgemäßes Herstellungsverfahren hergestellt wurde, wobei der vorvulkanisierte Laufstreifen 1 aus der Sicht der Reifenschulter in einem Längsschnitt dargestellt ist. Der vorvulkanisierte Laufstreifen 1 umfasst eine Lauffläche 6 und eine der Lauffläche 6 gegenüberliegenden Seite 7 des Laufstreifens 1, wobei innerhalb des vorvulkanisierten Laufstreifens 1 eine Verstärkungsschicht 2 angeordnet ist, die sich über die gesamte Länge des Laufstreifens 1 erstrecken kann.

In Figur 5 bildet die Verstärkungsschicht 2 die der Lauffläche 6 gegenüberliegende Seite 7 des Laufstreifens 1. D.h., in einem bestimmungsgemäßen Gebrauch des vorvulkanisierten Laufstreifens 1 mit einem Fahrzeugreifen ist die Lauffläche 6 radial außen und die Verstärkungsschicht 2 radial innen in dem Laufstreifen 1 ausgebildet. Die der Lauffläche 6 gegenüberliegende Seite 7 des Laufstreifens 1 weist durch die Verstärkungsschicht 2 eine raue Oberfläche auf, die dazu ausgebildet ist, eine Haftung zu einer nächstliegenden Schicht zu erhöhen.

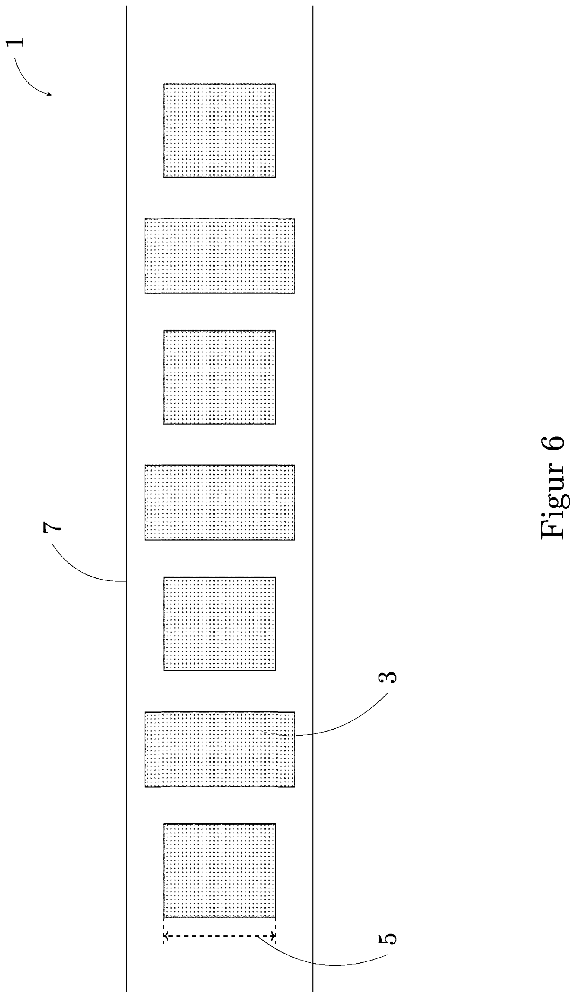

Die Figur 6 zeigt einen weiteren bevorzugten vorvulkanisierten Laufstreifen 1 in einem Längsschnitt aus der Sicht der der Lauffläche 6 gegenüberliegenden Seite 7 des Laufstreifens. Der vorvulkanisierte Laufstreifen 1 wurde durch ein erfindungsgemäßes Herstellungsverfahren hergestellt und umfasst eine Lauffläche 6 sowie eine der Lauffläche 6 gegenüberliegenden Seite 7 des Laufstreifens 1. Innerhalb des vorvulkanisierten Laufstreifens 1 ist eine Verstärkungsschicht 2 in Form einzelner Segmente 3 angeordnet, wobei die einzelnen Segmente 3 sich über die gesamte Länge des Laufstreifens 1 erstrecken können.

In Figur 6 weisen die einzelnen Segmente 3 der Verstärkungsschicht 2 entlang der Längsrichtung des vorvulkanisierten Laufstreifens 1 unterschiedliche Breiten 5 auf. D.h., in einem bestimmungsgemäßen Gebrauch des vorvulkanisierten Laufstreifens 1 mit einem Fahrzeugreifen weisen die einzelnen Segmente 3 der Verstärkungsschicht 2 unterschiedliche Breiten 5 in axialer Richtung auf, wobei die der axialen Richtung zugrunde liegende Achse die Drehachse des Fahrzeugreifens ist. Daraus ergibt sich ein Schutz beispielsweise gegenüber ein sich ausbreitendem Riss, wenn der Riss in einem Bereich mit einem Segment 3 mit einer kleinen Breite 5 auftritt und sich in Richtung eines Bereiches mit einem Segment 3 mit einer größeren Breite 5 ausbreitet, so wird die Ausbreitung an dem Segment 3 mit der größeren Breite 5 gestoppt.

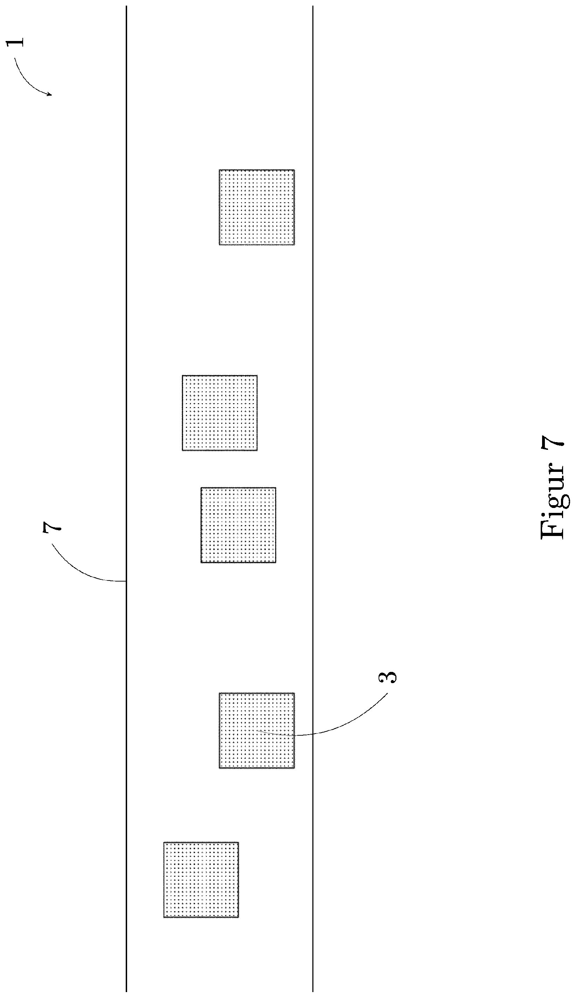

Die Figur 7 zeigt einen weiteren bevorzugten vorvulkanisierten Laufstreifen 1 in einem Längsschnitt aus der Sicht der der Lauffläche 6 gegenüberliegenden Seite 7 des Laufstreifens. Der vorvulkanisierte Laufstreifen 1 wurde durch ein erfindungsgemäßes Herstellungsverfahren hergestellt und umfasst eine Lauffläche 6 sowie eine der Lauffläche 6 gegenüberliegenden Seite 7 des Laufstreifens 1. Innerhalb des vorvulkanisierten Laufstreifens 1 ist eine Verstärkungsschicht 2 in Form einzelner Segmente 3 angeordnet, wobei die einzelnen Segmente 3 sich über die gesamte Länge des Laufstreifens 1 erstrecken können.

In Figur 7 sind die einzelnen Segmente 3 der Verstärkungsschicht 2 entlang der Längsrichtung des vorvulkanisierten Laufstreifens 1 an unterschiedlichen Positionen angeordnet. D.h., in einem bestimmungsgemäßen Gebrauch des vorvulkanisierten Laufstreifens 1 mit einem Fahrzeugreifen können die Positionen der einzelnen Segmente 3 den Positionen von Beschädigungen des Fahrzeugreifens gleichen.

### Bezugszeichenliste

- 1 -: vorvulkanisierter Laufstreifen
- 2 -: Verstärkungsschicht
- 3 -: Segmente
- 4 -: Dicke
- 5 -: Breite
- 6 -: Lauffläche
- 7 -: der Lauffläche gegenüberliegende Seite

## Patentansprüche

1. Herstellungsverfahren zum Herstellen eines vorvulkanisierten Laufstreifens (1), umfassend die Verfahrensschritte:
- Bereitstellen einer Laufstreifen-Vulkanisierpresse,
- Füllen der Laufstreifen-Vulkanisierpresse mit einem Komponentensatz, wobei der Komponentensatz eine Laufstreifenmischung umfasst,
- Vorvulkanisieren des Komponentensatzes in der Laufstreifen-Vulkanisierpresse zu dem vorvulkanisierten Laufstreifen (1),
- Entformen des vorvulkanisierten Laufstreifens (1) aus der Laufstreifen-Vulkanisierpresse, **dadurch gekennzeichnet, dass**
der Komponentensatz eine Verstärkungsschicht (2) umfasst.

2. Herstellungsverfahren nach Anspruch 1, **dadurch gekennzeichnet,**
**dass** die Verstärkungsschicht (2) sich über die gesamte Länge des vorvulkanisierten Laufstreifens (1) erstreckt.

3. Herstellungsverfahren nach Anspruch 1, **dadurch gekennzeichnet,**
**dass** die Verstärkungsschicht (2) einzelne Segmente (3) umfasst, die entlang der gesamten Länge des vorvulkanisierten Laufstreifens (1) angeordnet sind.

4. Herstellungsverfahren nach Anspruch 3, **gekennzeichnet durch**
- Anordnen der einzelnen Segmente (3) an vorbestimmten Positionen in Längsrichtung und in Querrichtung des vorvulkanisierten Laufstreifens (1).

5. Herstellungsverfahren nach einem der Ansprüche 3 und 4, **dadurch gekennzeichnet, dass** die einzelnen Segmente (3) unterschiedliche Materialkombinationen aufweisen.

6. Herstellungsverfahren nach einem der Ansprüche 3 bis 5, **dadurch gekennzeichnet, dass** die einzelnen Segmente (3) eine unterschiedliche Dicke (4) aufweisen.

7. Herstellungsverfahren nach einem der Ansprüche 3 bis 6, **dadurch gekennzeichnet, dass** die einzelnen Segmente (3) eine unterschiedliche Breite (5) aufweisen.

8. Herstellungsverfahren nach einem der vorhergehenden Ansprüche, **dadurch gekennzeichnet,**
**dass** die Verstärkungsschicht (2) eine der Lauffläche (6) gegenüberliegenden Seite des vorvulkanisierten Laufstreifens (1) bildet.

9. Vorvulkanisierter Laufstreifen (1), hergestellt durch ein Herstellungsverfahren nach einem der Ansprüche 1 bis 8.

10. Fahrzeugreifen mit einem vorvulkanisierten Laufstreifen (1) nach Anspruch 9.
